# EUROPEAN PATENT SPECIFICATION

(11) **EP 3 781 449 B1**
(45) Date of publication and mention of the grant of the patent: **10.04.2024**
(21) Application number: 19727053.1
(22) Date of filing: 23.04.2019
(51) Int. Cl.: B60W 30/095, G08G 1/16, B60W 50/14

(54) **A VEHICLE AND METHOD OF MEASURING A GAP**
FAHRZEUG UND VERFAHREN ZUR MESSUNG EINER LÜCKE
VÉHICULE ET PROCÉDÉ DE MESURE D'UN ESPACE

(30) Priority: 19.04.2018 GB 201806378
(43) Date of publication of application: 24.02.2021
(73) Proprietor: Bentley Motors Limited, Crewe, Cheshire CW1 3PL (GB)
(72) Inventor: DAY, Darren, Cheshire CW30ER (GB)
(74) Representative: Wilson Gunn
(86) International application number: PCT/GB2019/051139
(87) International publication number: WO 2019/202340

(56) References cited:
- DE-A1-102004 015 749
- DE-A1-102004 052 127
- DE-A1-102005 052 634
- US-A1- 2011 015 850
- US-A1- 2013 222 592

## Description

### Technical Field of the Invention

The present invention relates to a vehicle, specifically a vehicle comprising gap measuring apparatus instrument, and a method of measuring a gap.

### Background to the Invention

It is common for a vehicle to tow another vehicle, such as a trailer, which is wider than the vehicle itself. When this is the case, it can be difficult for a driver to judge if a gap, such as a gap between gate posts or tunnel walls, is wide enough for both the vehicle and trailer to pass through. Since the vehicle is narrower than the trailer, the driver cannot rely on judging whether the gap is wide enough to allow the front of the vehicle through, since the trailer could still become stuck and/or damaged when it passes through. A driver may also forget they have a trailer connected to the vehicle, and so they may accidentally enter a gap which is too narrow, damaging the trailer and/or vehicle and potentially getting stuck.

Additionally or alternatively, vehicles may be wider behind their driving position than in front. It can therefore be difficult for a driver located in front of the widest part of a vehicle to judge if a gap is wide enough for the whole vehicle to pass through, or it may be the case that the driver forgets that the vehicle varies in width. The result of this can be the vehicle becoming damaged and/or stuck.

DE 10 2004 015749 A1 discloses an arrangement which has a sensor unit for measuring a passage width between obstructions and/or a passage height below obstructions and an evaluation unit that compares the passage height and/or height with a vehicle width and/or height so that a warning is output for the case that the determined passage height and/or width do not allow the vehicle to pass.

US 2013/222592 A1 discloses a vehicle clearance alert system which includes at least one sensor or camera disposed at a vehicle and having an exterior field of view in a direction of travel of the vehicle. A control is responsive to the camera and is operable to determine a height dimension of a structure in the path of travel of the vehicle. The control is operable, responsive to (i) the determined height dimension of a structure in the path of travel of the vehicle and (ii) a height dimension of the vehicle, to determine if there is sufficient clearance between the structure and the vehicle for the vehicle to pass under the structure. Responsive to a determination that there is not sufficient clearance between the structure and the vehicle for the vehicle to pass under the structure, the alert system is operable to generate an alert to the driver of the vehicle.

DE 10 2005 052634 A1 discloses a method which involves determining a crossing breadth between two limitations of a point of constriction, and providing measures supporting a driver during and/or before the crossing of the point of constriction. The measures are dependent of the driver behaviour and/or the ability of the driver, where the measurements are acoustic warnings and/or optical, haptic and/or linguistic driving indication. The driver behaviour is detected during the crossing of the point of constriction.

Embodiments of the present invention are intended to prevent or at least mitigate the above problems.

### Summary of the Invention

According to a first aspect of the present invention there is provided a vehicle comprising at least one sensor arranged to determine the width of a gap faced or entered by the vehicle in its direction of travel, a processing unit arranged to compare the determined width of the gap to a set distance thereby to determine if the vehicle and/or an object towed by the vehicle can be driven through the gap, and a driver interface arranged to output a result to a driver of the vehicle if the processing unit determines that the vehicle and/or an object towed by the vehicle can be driven through the gap, the processing unit is operable to compare the distance from one edge defining the gap to the vehicle to the distance from the other edge defining the gap to the vehicle so as to determine a misalignment distance, which indicates how misaligned the centre of the vehicle is with the centre of the gap, the driver interface is arranged to output an indication of whether the centres are aligned or not to a driver of the vehicle, and the indication comprises information on how misaligned the centre of the vehicle and the centre of the gap are, including the misalignment distance and the direction the vehicle must move to align the centres.

Thus a driver of a vehicle can be warned in advance if a gap approached or partially entered by the vehicle is insufficiently wide for the remainder of the vehicle or a towed object, such as another vehicle, to pass through. This therefore prevents or reduces the chances of a driver attempting to pass through a gap which is too small, and so damage the vehicle or a towed object, or become stuck.

The at least one sensor may be arranged to determine the width of a gap entered by a part of the vehicle, typically the front of the vehicle, and the processing unit is arranged to determine if the remainder of the vehicle and/or an object towed by the vehicle can be driven through the gap.

There may be two or more sensors. The or each sensor may be operable to detect the position of edges defining the gap. Where there are two or more sensors, sensors may be positioned on opposite sides respectively of the vehicle. Each such sensor may be operable to detect the position of an edge which faces the side of the vehicle on which the sensor is positioned. Alternatively the or each sensor may be arranged to detect edges to the side and in front of the vehicle.

The/or each sensor may detect the position of an edge defining the gap relative to itself. The/or each sensor may be operable to detect the distance between detected edges and the vehicle. The vehicle may comprise an outer surface. The/or each sensor may be positioned on the outer surface, preferably to the sides and/or front corners of the vehicle. The/or each sensor may be positioned towards the front of the vehicle. Each sensor may be positioned on a front fender of a vehicle and may be positioned in a side of a front bumper of a vehicle. The or each sensor may be either an electromagnetic, optical or audio sensor or any other suitable type of sensor operable to measure distance.

The/or each sensor may be arranged to determine the width of a gap faced or entered by the vehicle when travelling in a forward direction.

The processing unit may be operable to sum detected or determined distances between the edges and the sensors so as to determine a measurement of the distance between the edges, and thus the width of the gap they define. The sum may comprise the distances between the detected positions and the sensors and a known distance between the sensors. The processing unit may be operable to compare the measured width of a gap to the set distance to determine whether the measured width is greater than, equal to or less that the set distance.

The vehicle may comprise a memory storage unit operable to store the set distance. The processing unit may be operable to obtain the set distance from the memory storage unit. The driver interface may enable a value for the set distance to be entered. The memory storage unit may be operable to store more than one set distance. In such embodiments, the driver interface may enable a driver to select the set distance to be used.

The set distance may be the maximum width of the vehicle, or the maximum width of a towed object. The set distance may exceed either of these distances to provide a margin for error and/or to provide clearance to enable the vehicle or a towed object to be driven through a gap. The memory storage may store a clearance value and this may be added to an entered or stored width value by the processing unit to produce a set distance value, to ensure that a clearance is provided.

The maximum width of the vehicle may be behind the driver's position in the vehicle. The rear of the vehicle may thus be wider than the front of the vehicle.

The driver interface may be operable to produce an output only if the determined width of a gap does not exceed the set distance. Alternatively the driver interface unit may be operable to only or to additionally produce an output when the determined width of a gap exceeds the set distance. This output should be different from an output produced when the determined width of a gap does not exceed the set distance and so the driver interface may be operable to output two different indications, one if the measured distance is greater than the set distance and another if the measured distance is equal to or less than the set distance. The indications may comprise a visual and/or audio and/or haptic output. A visual output may comprise a warning lamp or a change of colour of a lamp or an indication on a visual display. An audio output may comprise an alarm signal which may be an automated vocal warning. A haptic output may include vibration of a vehicle control such as a steering wheel. The/or each indication may comprise or otherwise depend upon or vary with the difference between the measured distance and the set distance.

Where the driver interface can output each of two different indications it may constantly output an indication as the vehicle passes through a gap, which allows a user to know that the sensor arrangement operating as the vehicles passes through the gap. In this case, the processing unit may be arranged to cause the driver interface only to produce an output when it is detected that the vehicle is approaching or passing through a gap of less than a predetermined width which is greater than the set distance. This avoids the driver interface producing a potentially distracting output when the vehicle is passing through a gap of sufficient width that no driver guidance is required.

The processing unit is operable to compare the distance from one edge defining the gap to the vehicle to the distance from the other edge defining the gap to the vehicle so as to determine a misalignment distance which indicates how misaligned the centre of the vehicle is with the centre of the gap.

The driver interface is arranged to output an indication of whether the centres are aligned or not to a driver of the vehicle. The driver interface may be operable to output an indication only if the difference is above a minimum value. The indication may comprise a visual and/or audio and/or haptic output. The indication comprises information on how misaligned the centre of the vehicle and the centre of the gap are, including the misalignment distance and the direction the vehicle must move to align the centres. The misalignment distance may be half the difference between the distance from one edge defining the gap to the vehicle and the distance from the other edge defining the gap to the vehicle.

The memory storage unit may be operable to store the minimum value. The driver interface may enable a value for the minimum value to be entered. Additionally or alternatively, the driver interface may enable a driver to select a minimum value.

The processing unit may be operable to compare the misalignment distance with the difference between the determined gap width and the set distance so as to determine whether the vehicle and/or towed object could collide with the one edge of the gap, wherein if the misalignment distance is greater than half the difference this results in a determination of a risk of collision. The driver interface may be arranged to output an indication of a risk of collision, in particular of a risk of collision between a particular side of the vehicle and/or towed object and one edge of the gap. The indication may comprise a visual and/or audio and/or haptic output.

The processing unit determining whether the centre of the vehicle is aligned with the centre of the gap allows the driver to be warned if they are closer to one side of a gap than the other, and so reduces the chances of accidentally colliding with one side of the gap. Further to this, determining whether the vehicle and/or towed object could collide with one edge of the gap helps clarify to the driver when action must be taken so as to avoid a collision. The minimum value prevents the driver interface outputting an indication that the centres are misaligned when the amount of the misalignment is negligible, and so prevents the driver from being distracted unnecessarily.

The processing unit and/or the memory storage unit may form at least part of an on-board vehicle computer or processor.

The sensors and processing unit may be connected by cables or conductors or wirelessly. The driver interface may comprise a touch screen display and/or an audio unit.

The processing unit may be arranged to cause the vehicle to come to halt, for example by applying vehicle brakes, in the event that it is detected that the vehicle is about to enter or has entered a gap which is narrower than the set distance and/or the vehicle and/or towed object could collide with one edge of the gap.

The vehicle may be a road or land vehicle. The vehicle may be an automobile, truck or tractor. The vehicle may be towing a trailer, horsebox, caravan or another vehicle.

According to a second aspect of the present invention there is provided a method of measuring a gap comprising the steps of:
a) providing a vehicle according to the first aspect of the present invention;
b) determining, using the at least one sensor, the width of a gap faced or entered by the vehicle;
c) determining, using the processing unit, if the width of the gap exceeds a set distance; and
d) producing an output via the driver interface if the processing unit determines that the vehicle and/or an object towed by the vehicle can be driven through the gap,
e) comparing, using the processing unit, the distance from one edge defining the gap to the vehicle to the distance from the other edge defining the gap to the vehicle so as to determine a misalignment distance, which indicates how misaligned the centre of the vehicle is with the centre of the gap; and
f) outputting, using the driver interface, an indication of whether the centres are aligned or not to a driver of the vehicle, the indication comprises information on how misaligned the centre of the vehicle and the centre of the gap are, including the misalignment distance and the direction the vehicle must move to align the centres.

The second aspect of the present invention may comprise and/or incorporate any or all of the features of the first aspect, as desired or appropriate.

### Detailed Description of the Invention

In order that the invention may be more clearly understood one or more embodiments thereof will now be described, by way of example only, with reference to the accompanying drawings, of which:
- Figure 1: is a block diagram of a gap measurement apparatus according to the present invention;
- Figure 2: is a plan view of two automobiles towing a trailer, travelling through two differently sized gaps; and
- Figure 3: is a plan view of two automobiles travelling through two differently sized gaps.

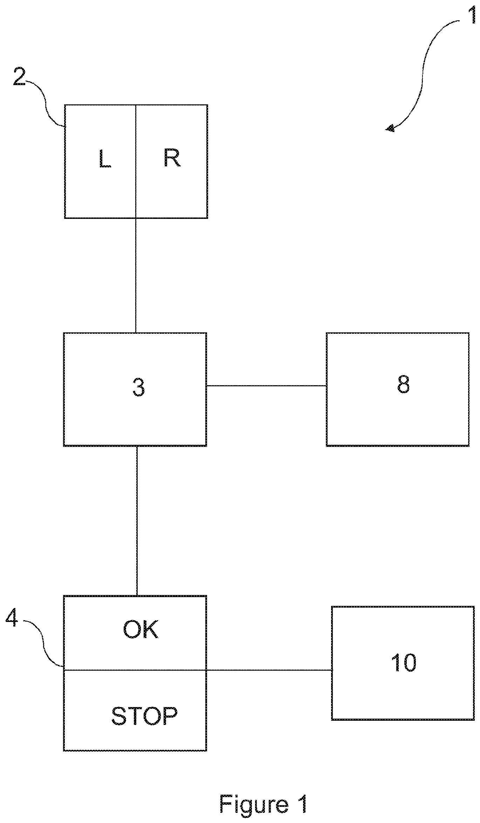

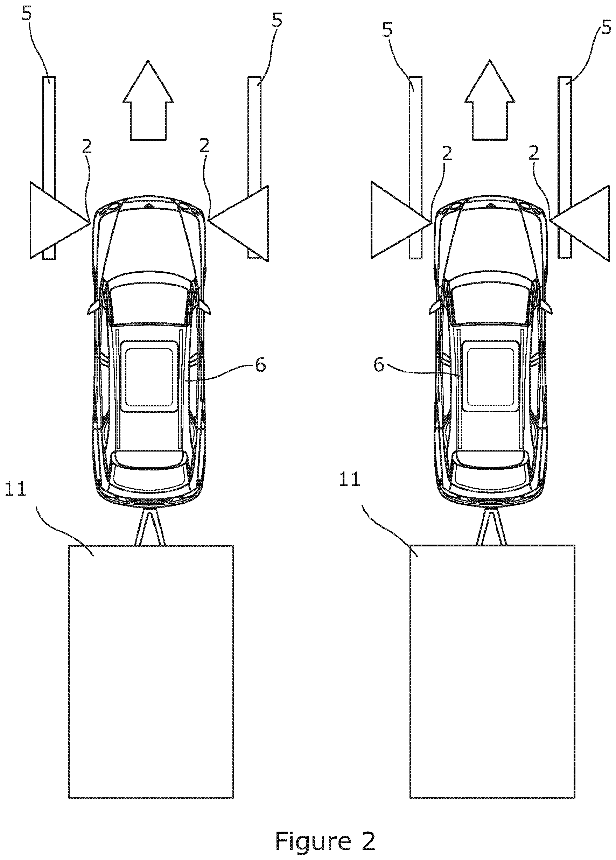

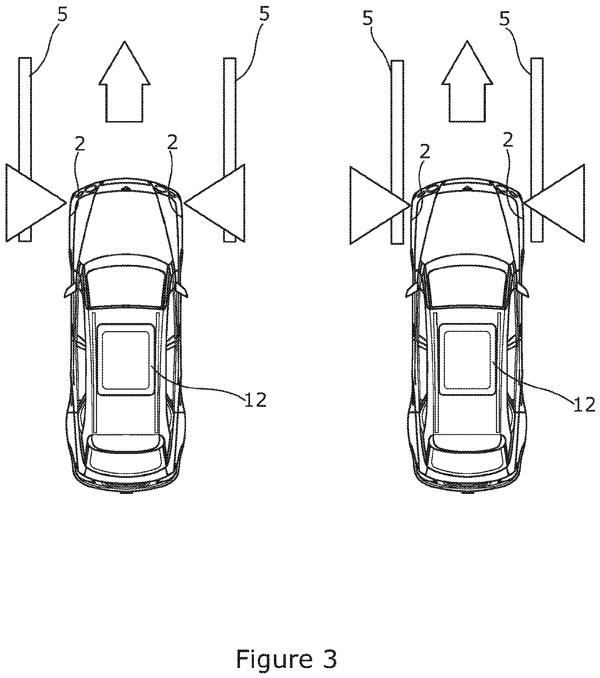

Referring to the drawings, figure 1 shows gap measurement apparatus 1 fitted to the automobiles of figures 2 and 3. It comprises a set of two sensors 2, a processing unit 3, a driver interface 4 comprising an input unit 10, and a memory storage unit 8.

The set of sensors 2 comprises one left and one right hand sensor. Each sensor detects the distance of the edges of objects 5 from the sensor, the objects 5 being at opposite sides of the front of the automobile 6. The distances are transferred to the processing unit 3, which determines the width of the gap between the edges by summing the two measured distances and the distance between the two sensors 2 which is stored in the memory storage unit 8 when the vehicle 6 is manufactured and then compares the determined width to a set distance also stored in the memory storage unit 8. The result of this comparison is transferred to the driver interface unit 4, which outputs a signal indicating if the determined width is less than or equal to the set distance, or if the determined width is greater than the set distance. The driver interface 4 also comprises an input unit 10, which can be used to input a width, such as the maximum width of a trailer, for storage by the memory storage unit 8.

As shown in figures 2 and 3 a sensor 2 is fitted towards the front end of each front fender of the vehicle (and could be fitted to a front bumper mounted on or forming part of each front fender). Each sensor 2 thus faces in an opposite direction and detects objects, for example a tunnel wall, facing the side of the vehicle 6 on which the sensor is fitted. The sensors 2 can be any suitable type, including, for example, electromagnetic, optical sensors and/or audio sensors.

When a sensor 2 detects the distance of an object 5, it transmits the distance to the processing unit 3. If both sensors 2 detect an object 5 on their respective sides at the same time, the processing unit 3 will operate to determine the distance between the two objects 5.

In the embodiment shown in figure 2, the set distance represents a measurement of the widest section of the trailer 11. Preferably the set distance is slightly larger than the measurement of the widest section of the trailer 11, the additional distance acting to allow some clearance between the trailer 11 and the objects 5. This set distance is entered by a driver using the input unit 10 of the driver interface 4, after they have measured (or otherwise determined) the maximum width of the trailer 11.

If the processing unit 3 determines that the measured distance is equal to or less than the set distance as is the case with the vehicle shown to the right hand side of figure 2 where the vehicle 6 but not its trailer 11 will fit through the gap, it causes the driver interface unit 4 to output an indication, for example a red lamp or a symbol or image on a screen (e.g. "STOP"), to advise the driver that the trailer 11 will not fit between the two objects 5. In such cases, the indication could comprise an audio component (for example, an automated voice warning) alongside a visual display on a screen. Optionally, if the processing unit 3 determines that the measured distance is greater than the set distance, as with the vehicle shown to the left hand side of figure 2 where both the vehicle 6 and its trailer 11 will pass through the gap, it may cause the driver interface 4 to output an indication, for example a green lamp or a symbol or image on a screen (e.g. "OK"), to advise the driver that the vehicle (and thus trailer) may pass between the two objects 5. In one embodiment this optional indication is only provided when the measured distance between objects on opposite sides of the vehicle is less than a predetermined value but greater than the set distance. Thus the driver is given reassurance that the apparatus is operating when driving through a relatively narrow gap, but for wider gaps is not distracted.

The processing unit 3 also determines if one side of the vehicle is closer to the edge of the gap than the other, and whether the centre of the vehicle 6 is therefore aligned with the centre of the gap between the objects 5 or not. The processing unit 3 compares the distance between one object 5 and the side of the vehicle 6 it faces with the distance between the other object 5 and the side of the vehicle 6 it faces. If the distances are not equal, and the difference is above a minimum value, the processing unit 3 causes the driver interface 4 to output an indication that the centre of the vehicle 6 is not aligned with the centre of the gap between the objects 5. The indication can comprise a symbol or image, and/or an audio component. Additionally, the indication comprises information on the distance by which the centres are misaligned, and the side to which the vehicle must be moved towards or away from to align the centres. The processing unit 3 can calculate the misalignment distance by dividing the difference between the distances each side of the vehicle 6 in half when the front part of the vehicle 6 (and therefore the sensors 2) are within the gap.

The minimum value prevents the driver interface 4 outputting an indication that the centres are misaligned when the difference between the distances are relatively small. The minimum value is stored in the memory storage unit 8 and can be programmed into the unit 8 and/or selected from a number of options by a driver using the driver interface 4.

If the centres are misaligned, the processing unit 3 can also determine if the trailer 11 will hit the object 5 to which the vehicle 6 is closest. The processing unit 3 compares the misalignment distance with the difference between the determined width of the gap between the objects 5 and the set distance. If the misalignment distance is greater than half the difference, the processing unit 3 causes the driver interface 4 to include in its indication information that the relevant side of the trailer 11 is in danger of hitting the respective object 5.

In some embodiments, the processing unit can be connected to the brakes of the vehicle 6. If the vehicle 6 continues to pass through the gap between the objects despite the driver interface 4 outputting an indication that the trailer 11 will not fit or will hit an object 5 on a particular side, the processing unit 3 may active the brakes so as to stop the vehicle 6 automatically.

The processing unit 3 and memory storage unit 8 can form part of or be implemented by an existing computing system or processor of the automobile. Similarly the driver interface unit may be provided by an existing driver interface of the automobile such as a touch screen.

As shown in figure 3, the gap measurement apparatus may also be usefully employed when an automobile 12 is not attached to a trailer 11 (or other towed object). In this case the rear of automobile 12, behind the driving position, is wider than the front. Therefore, the set distance of the apparatus is set as the maximum width of the automobile (preferably in addition to a clearance distance). The driver interface unit 4 thus outputs an indication of whether or not the automobile will fit between two detected objects 5. In this embodiment the set distance can be stored on the memory storage unit 8 when the gap measurement instrument 1 is installed onto the vehicle 12. As will be seen in figure 3 the vehicle on the left hand side will pass through the gap. The front of the vehicle on the right hand side will pass into the gap, but the rear of the vehicle is wider than the front and will not pass into the gap.

The gap measurement apparatus could also be usefully employed in a vehicle which is not wider behind the driving position than in front, but in this case the sensors should be at least partially forward facing and the processing unit arranged to calculate the distance between the objects 5 before the vehicle passes between the objects.

The gap measurement apparatus 1 can be installed in a vehicle 6, 12 as the vehicle 6, 12 is being built. Alternatively, the gap measurement instrument 1 can be installed after the vehicle 6, 12 has been built.

The above embodiments are described by way of example only. Many variations are possible without departing from the scope of the invention as defined in the appended claims.

## Claims

1. A vehicle (6) comprising at least one sensor (2) arranged to determine the width of a gap faced or entered by the vehicle (6) in its direction of travel, a processing unit (3) arranged to compare the determined width of the gap to a set distance thereby to determine if the vehicle (6) and/or an object (5) towed by the vehicle (6) can be driven through the gap, and a driver interface (4) arranged to output a result to a driver of the vehicle (6) if the processing unit (3) determines that the vehicle (6) and/or an object (5) towed by the vehicle (6) can be driven through the gap, **characterised in that** the processing unit (3) is operable to compare the distance from one edge defining the gap to the vehicle (6) to the distance from the other edge defining the gap to the vehicle (6) so as to determine a misalignment distance, which indicates how misaligned the centre of the vehicle (6) is with the centre of the gap, the driver interface (4) is arranged to output an indication of whether the centres are aligned or not to a driver of the vehicle (6), and the indication comprises information on how misaligned the centre of the vehicle (6) and the centre of the gap are, including the misalignment distance and the direction the vehicle (6) must move to align the centres.

2. A vehicle (6) according to claim 1 wherein the processing unit (3) is operable to compare the misalignment distance with the difference between the determined gap width and the set distance so as to determine whether the vehicle (6) and/or object (5) towed by the vehicle (6) could collide with one edge of the gap, wherein if the misalignment distance is greater than half the difference this results in a determination of a risk of collision.

3. A vehicle (6) as claimed in any preceding claim wherein the at least one sensor (2) is arranged to determine the width of a gap entered by a part of the vehicle (6) and the processing unit (3) is arranged to determine if the remainder of the vehicle (6) and/or an object (5) towed by the vehicle can be driven through the gap.

4. A vehicle (6) according to any preceding claim wherein the/or each sensor (2) is positioned towards the front of the vehicle (6).

5. A vehicle (6) according to any preceding claim wherein the/or each sensor (2) is operable to detect the position of edges defining the gap.

6. A vehicle (6) according to any preceding claim, comprising at least two sensors (2) and wherein the sensors (2) are positioned on opposite sides of the vehicle (6).

7. A vehicle (6) according to claim 6 when dependent on claim 5 wherein each sensor (2) is operable to detect the distance between the sensor (2) and a respective detected position.

8. A vehicle (6) according to claim 5 wherein the processing unit (3) is operable to determine the distance between the detected positions and the vehicle (6).

9. A vehicle (6) according to either claim 7 or claim 8 wherein the processing unit (3) is operable to sum the detected distances between the edges and the sensors (2) so as to determine the distance between the edges and thus the width of the gap.

10. A vehicle (6) according to claim 9 wherein the processing unit (3) is operable to compare the measurement to a set distance so as to determine whether the measured distance is greater than, equal to or less that the set distance, thereby to determine if the vehicle (6) and/or an object (5) towed by the vehicle (6) can be driven through the gap.

11. A vehicle (6) according to claim 10 wherein the vehicle (6) is towing an object and the set distance is at least the maximum width of the object (5).

12. A vehicle (6) according to claim 10 wherein the set distance is at least the maximum width of the vehicle (6).

13. A vehicle (6) according to either of claims 11 or 12 wherein the set distance additionally includes a clearance distance.

14. A method of measuring a gap comprising the steps of:
providing a vehicle (6) according to any of claims 1 to 13;
determining, using the at least one sensor (2), the width of a gap faced or entered by the vehicle (6);
determining, using the processing unit (3), if the width of the gap exceeds a set distance;
producing an output via the driver interface (4) if the processing unit (3) determines that the vehicle (6) and/or an object (5) towed by the vehicle (6) can be driven through the gap; **characterised by**
comparing, using the processing unit (3), the distance from one edge defining the gap to the vehicle (6) to the distance from the other edge defining the gap to the vehicle (6) so as to determine a misalignment distance, which indicates how misaligned the centre of the vehicle (6) is with the centre of the gap; and
outputting, using the driver interface (4), an indication of whether the centres are aligned or not to a driver of the vehicle (6), the indication comprises information on how misaligned the centre of the vehicle (6) and the centre of the gap are, including the misalignment distance and the direction the vehicle (6) must move to align the centres.

15. A method as claimed in claim 14 comprising the step of entering the set distance via a driver interface (4) and wherein the set distance is at least the maximum width of the vehicle (6) or the maximum width of an object (5) towed by the vehicle (6), whichever is the greater.

## Patentansprüche

1. Fahrzeug (6), umfassend mindestens einen Sensor (2), der dazu ausgelegt ist, dass er die Breite einer Lücke bestimmt, der das Fahrzeug (6) in seiner Fahrtrichtung gegenübersteht oder in die es einfährt, eine Verarbeitungseinheit (3), die dazu ausgelegt ist, dass sie die bestimmte Breite der Lücke mit einer festgelegten Distanz vergleicht, um dadurch zu bestimmen, ob das Fahrzeug (6) und/oder ein von dem Fahrzeug (6) gezogenes Objekt (5) durch die Lücke gefahren werden kann, und eine Fahrerschnittstelle (4), die dazu ausgelegt ist, dass sie ein Ergebnis an einen Fahrer des Fahrzeugs (6) ausgibt, wenn die Verarbeitungseinheit (3) bestimmt, dass das Fahrzeug (6) und/oder ein von dem Fahrzeug (6) gezogenes Objekt (5) durch die Lücke gefahren werden kann,
**dadurch gekennzeichnet, dass** die Verarbeitungseinheit (3) so betreibbar ist, dass sie die Distanz von einem die Lücke definierenden Rand zum Fahrzeug (6) mit der Distanz von dem anderen die Lücke definierenden Rand zum Fahrzeug (6) vergleicht, um so eine Fehlausrichtungsdistanz zu bestimmen, die anzeigt, wie sehr das Zentrum des Fahrzeugs (6) mit dem Zentrum der Lücke fehlausgerichtet ist, die Fahrerschnittstelle (4) dazu ausgelegt ist, dass sie eine Anzeige darüber, ob die Zentren ausgerichtet sind oder nicht, an einen Fahrer des Fahrzeugs (6) ausgibt, und die Anzeige Informationen darüber umfasst, wie sehr das Zentrum des Fahrzeugs (6) und das Zentrum der Lücke fehlausgerichtet sind, einschließlich der Fehlausrichtungsdistanz und der Richtung, in die sich das Fahrzeug (6) bewegen muss, um die Zentren auszurichten.

2. Fahrzeug (6) gemäß Anspruch 1, wobei die Verarbeitungseinheit (3) so betreibbar ist, dass sie die Fehlausrichtungsdistanz mit der Differenz zwischen der bestimmten Lückenbreite und der festgelegten Distanz vergleicht, um so zu bestimmen, ob das Fahrzeug (6) und/oder das von dem Fahrzeug (6) gezogene Objekt (5) mit einem Rand der Lücke kollidieren könnte, wobei, wenn die Fehlausrichtungsdistanz größer als die Hälfte der Differenz ist, dies zu einer Bestimmung eines Kollisionsrisikos führt.

3. Fahrzeug (6) nach einem der vorhergehenden Ansprüche, wobei der mindestens eine Sensor (2) dazu ausgelegt ist, dass er die Breite einer Lücke bestimmt, in die ein Teil des Fahrzeugs (6) einfährt, und die Verarbeitungseinheit (3) dazu ausgelegt ist, dass sie bestimmt, ob der Rest des Fahrzeugs (6) und/oder ein von dem Fahrzeug gezogenes Objekt (5) durch die Lücke gefahren werden kann.

4. Fahrzeug (6) gemäß einem der vorhergehenden Ansprüche, wobei der/oder jeder Sensor (2) in Richtung der Vorderseite des Fahrzeugs (6) positioniert ist.

5. Fahrzeug (6) gemäß einem der vorhergehenden Ansprüche, wobei der/oder jeder Sensor (2) so betreibbar ist, dass er die Position von die Lücke definierenden Rändern detektiert.

6. Fahrzeug (6) gemäß einem der vorhergehenden Ansprüche, das mindestens zwei Sensoren (2) umfasst, wobei die Sensoren (2) auf gegenüberliegenden Seiten des Fahrzeugs (6) positioniert sind.

7. Fahrzeug (6) gemäß Anspruch 6, wenn dieser von Anspruch 5 abhängt, wobei jeder Sensor (2) so betreibbar ist, dass er die Distanz zwischen dem Sensor (2) und einer entsprechenden detektierten Position detektiert.

8. Fahrzeug (6) gemäß Anspruch 5, wobei die Verarbeitungseinheit (3) so betreibbar ist, dass sie die Distanz zwischen den detektierten Positionen und dem Fahrzeug (6) bestimmt.

9. Fahrzeug (6) gemäß Anspruch 7 oder Anspruch 8, wobei die Verarbeitungseinheit (3) so betreibbar ist, dass sie die detektierten Distanzen zwischen den Rändern und den Sensoren (2) summiert, um so die Distanz zwischen den Rändern und damit die Breite der Lücke zu bestimmen.

10. Fahrzeug (6) gemäß Anspruch 9, wobei die Verarbeitungseinheit (3) so betreibbar ist, dass sie die Messung mit einer festgelegten Distanz vergleicht, um so zu bestimmen, ob die gemessene Distanz größer als, gleich oder kleiner als die festgelegte Distanz ist, um dadurch zu bestimmen, ob das Fahrzeug (6) und/oder ein von dem Fahrzeug (6) gezogenes Objekt (5) durch die Lücke gefahren werden kann.

11. Fahrzeug (6) gemäß Anspruch 10, wobei das Fahrzeug (6) ein Objekt zieht und die festgelegte Distanz mindestens der maximalen Breite des Objekts (5) entspricht.

12. Fahrzeug (6) gemäß Anspruch 10, wobei die festgelegte Distanz mindestens der maximalen Breite des Fahrzeugs (6) entspricht.

13. Fahrzeug (6) gemäß einem der Ansprüche 11 oder 12, wobei die festgelegte Distanz zusätzlich eine Sicherheitsdistanz enthält.

14. Verfahren zur Messung einer Lücke, das die folgenden Schritte umfasst:
Bereitstellen eines Fahrzeugs (6) gemäß einem der Ansprüche 1 bis 13;
Bestimmen, unter Verwendung des mindestens einen Sensors (2), der Breite einer Lücke, der das Fahrzeug (6) gegenübersteht oder in die es einfährt;
Bestimmen, unter Verwendung der Verarbeitungseinheit (3), ob die Breite der Lücke eine festgelegte Distanz überschreitet;
Erzeugen einer Ausgabe über die Fahrerschnittstelle (4), wenn die Verarbeitungseinheit (3) bestimmt, dass das Fahrzeug (6) und/oder ein von dem Fahrzeug (6) gezogenes Objekt (5) durch die Lücke gefahren werden kann; **gekennzeichnet durch**
Vergleichen, unter Verwendung der Verarbeitungseinheit (3), der Distanz von einem die Lücke definierenden Rand zu dem Fahrzeug (6) mit der Distanz von dem anderen die Lücke definierenden Rand zu dem Fahrzeug (6), um so eine Fehlausrichtungsdistanz zu bestimmen, die anzeigt, wie sehr das Zentrum des Fahrzeugs (6) mit dem Zentrum der Lücke fehlausgerichtet ist; und
Ausgeben, unter Verwendung der Fahrerschnittstelle (4), einer Anzeige, ob die Zentren ausgerichtet sind oder nicht, an einen Fahrer des Fahrzeugs (6), wobei die Anzeige Informationen darüber umfasst, wie sehr das Zentrum des Fahrzeugs (6) und das Zentrum der Lücke fehlausgerichtet sind, einschließlich der Fehlausrichtungsdistanz und der Richtung, in die sich das Fahrzeug (6) bewegen muss, um die Zentren auszurichten.

15. Verfahren nach Anspruch 14, das den Schritt der Eingabe der festgelegten Distanz über eine Fahrerschnittstelle (4) umfasst, wobei die festgelegte Distanz mindestens der maximalen Breite des Fahrzeugs (6) oder der maximalen Breite eines von dem Fahrzeug (6) gezogenen Objekts (5) entspricht, je nachdem, welcher Wert größer ist.

## Revendications

1. Véhicule (6) comprenant au moins un capteur (2) agencé pour déterminer la largeur d'un intervalle en face du véhicule (6) ou dans lequel il entre dans sa direction de déplacement, une unité (3) de traitement agencée pour comparer la largeur déterminée de l'intervalle à une distance fixée pour déterminer ainsi si le véhicule (6) et/ou un objet (5) remorqué par le véhicule (6) peut être conduit dans l'intervalle, et une interface (4) de conducteur agencée pour sortir un résultat au conducteur du véhicule (6), si l'unité (3) de traitement détermine que le véhicule (6) et/ou un objet (5) remorqué par le véhicule (6) peut être conduit dans l'intervalle, **caractérisé en ce que** l'unité (3) de traitement peut fonctionner pour comparer la distance d'un bord définissant l'intervalle au véhicule (6) à la distance de l'autre bord définissant l'intervalle au véhicule (6), de manière à déterminer une distance de désalignement, qui indique combien le centre du véhicule (6) est désaligné avec le centre de l'intervalle, l'interface (4) du conducteur étant agencée pour donner à un conducteur du véhicule (6) une indication sur le point de savoir si les centres sont alignés ou ne le sont pas, et l'indication comprend une information sur comment le centre du véhicule (6) et le centre de l'intervalle sont désalignés, incluant la distance de désalignement et la direction dans laquelle le véhicule (6) doit se déplacer pour aligner les centres.

2. Véhicule (6) suivant la revendication 1, dans lequel l'unité (3) de traitement peut fonctionner pour comparer la distance de désalignement à la différence entre la largeur déterminée de l'intervalle et la distance fixée, de manière à déterminer si le véhicule (6) et/ou l'objet (5) remorqué par le véhicule (6) pourrait entrer en collision avec un bord de l'intervalle, dans lequel, si la distance de désalignement est plus grande que la moitié de la différence de ce résultat, cela se traduit par la détermination d'un danger de collision.

3. Véhicule (6) suivant l'une quelconque des revendications précédentes, dans lequel le au moins un capteur (2) est agencé pour déterminer la largeur d'un intervalle, dans lequel une partie du véhicule (6) entre, et l'unité (3) de traitement est agencée pour déterminer si le reste du véhicule (6) et/ou d'un objet (5) remorqué par le véhicule peut être conduit dans l'intervalle.

4. Véhicule (6) suivant l'une quelconque des revendications précédentes, dans lequel le ou chaque capteur (2) est mis en position vers l'avant du véhicule (6).

5. Véhicule (6) suivant l'une quelconque des revendications précédentes, dans lequel le ou chaque capteur (2) peut fonctionner pour détecter la position de bords définissant l'intervalle.

6. Véhicule (6) suivant l'une quelconque des revendications précédentes, comprenant au moins deux capteurs (2) et dans lequel les capteurs (2) sont mis en position sur des côtés opposés du véhicule (6).

7. Véhicule (6) suivant la revendication 6, lorsqu'elle dépend de la revendication 5, dans lequel chaque capteur (2) peut fonctionner pour détecter la distance entre le capteur (2) et une position détectée respective.

8. Véhicule (6) suivant la revendication 5, dans lequel l'unité (3) de traitement peut fonctionner pour déterminer la distance entre les positions détectées et le véhicule (6).

9. Véhicule (6) suivant la revendication 7 ou la revendication 8, dans lequel l'unité (3) de traitement peut fonctionner pour faire la somme des distances détectées entre les bords et les capteurs (2), de manière à déterminer la distance entre les bords et ainsi la largeur de l'intervalle.

10. Véhicule (6) suivant la revendication 9, dans lequel l'unité (3) peut fonctionner pour comparer la distance à une distance fixée, de manière à déterminer si la distance mesurée est supérieure ou égale ou inférieure à la distance fixée, en déterminant ainsi si le véhicule (6) et/ou un objet (5) remorqué par le véhicule (6) peut être conduit dans l'intervalle.

11. Véhicule (6) suivant la revendication 10, dans lequel le véhicule (6) remorque un objet et la distance fixée est au moins la largeur maximum de l'objet (5).

12. Véhicule (6) suivant la revendication 10, dans lequel la distance fixée est au moins la largeur maximum du véhicule (6) .

13. Véhicule (6) suivant la revendication 11 ou 12, dans lequel la distance fixée comprend supplémentairement une distance libre.

14. Procédé de mesure d'un intervalle comprenant les stades dans lesquels :
on se procure un véhicule (6) suivant l'une quelconque des revendications 1 à 13 ;
on détermine, en utilisant le au moins un capteur (2), la largeur d'un intervalle en face du véhicule (6) ou dans lequel il entre ;
on détermine, en utilisant l'unité (3) de traitement, si la largeur de l'intervalle dépasse une distance fixée ;
on produit un signal de sortie, par l'interface (4) du conducteur, si l'unité (3) de traitement détermine que le véhicule (6) et/ou un objet (5) remorqué par le véhicule (6) peut être conduit dans l'intervalle ; **caractérisé en ce qu'** l'on compare, en utilisant l'unité (3) de traitement, la distance d'un bord définissant l'intervalle au véhicule (6) à la distance de l'autre bord définissant l'intervalle au véhicule (6), de manière à déterminer une distance de désalignement, qui indique comment le centre du véhicule (6) est désaligné du centre de l'intervalle ; et
on sort, en utilisant l'interface (4) du conducteur, une indication donnée au conducteur du véhicule (6), si les centres sont alignés ou ne le sont pas, l'indication comprenant une information sur combien le centre du véhicule (6) et le centre de l'intervalle sont désalignés et incluant la distance de désalignement et la direction dans laquelle le véhicule (6) doit se déplacer pour aligner les centres.

15. Procédé suivant la revendication 14, comprenant le stade dans lequel on entre la distance fixée, par l'intermédiaire d'une interface (4) de conducteur, et dans lequel la distance fixée est au moins la largeur maximum du véhicule (6) ou la largeur maximum d'un objet (5) remorqué par le véhicule (6), celle étant la plus grande.
